# FASCICULE DE BREVET EUROPEEN

(11) **EP 2 192 396 B1**
(45) Date de publication et mention de la délivrance du brevet: **09.10.2013**
(21) Numéro de dépôt: 09175043.0
(22) Date de dépôt: 04.11.2009
(51) Int. Cl.: G01M 3/34, B60T 13/52

(54) **Agencement de contrôle de l'étanchéité d'une chambre d'un appareil sur une chaîne de montage**
Anordnung zur Kontrolle der Dichtigkeit einer Kammer eines Geräts auf einer Montagekette
Arrangement for checking the seal of a chamber of a device on an assembly line

(30) Priorité: 27.11.2008 FR 0806684
(43) Date de publication de la demande: 02.06.2010
(73) Titulaire: Robert Bosch GmbH, 70442 Stuttgart (DE)
(72) Inventeur: Espina, Armando, 48011, Bilbao (ES); Aristizabal, Sergio, 31100, Puente La Reina (ES)

(56) Documents cités:
- EP-A1- 0 020 256
- DE-A1-102004 028 875
- US-A1- 2003 061 866

## Description

L'invention se rapporte à une chaîne de montage selon la revendication 1.

Une chaîne de montage des servofreins est connue du document EP 0020256 A1.

L'invention se rapporte plus particulièrement à un agencement de contrôle de l'étanchéité d'une chambre d'un appareil sur une chaîne de montage de l'appareil, ladite chaîne comportant au moins un premier poste de mise de la chambre à une pression déterminée et un deuxième poste de fabrication distant du premier poste, l'appareil étant transporté du premier poste au deuxième poste par un support mobile de transport, ledit agencement de contrôle comportant un capteur de pression dont une partie sensible est susceptible d'être agencée dans la chambre de l'appareil lors de sa mise à la pression déterminée pour prendre une première mesure de référence de la pression à l'intérieur de la chambre après la mise à la pression déterminée de la chambre au premier poste, puis une deuxième mesure de contrôle de la pression à l'intérieur de la chambre à l'issue d'une durée de temporisation.

Lors de la fabrication en série de certains appareils comportant une chambre destinée à être maintenue à une pression déterminée, tels que, par exemple, des servofreins à dépression destinés à être maintenus à une pression dite "de vide", il est connu de réaliser une opération de contrôle de l'étanchéité de la chambre.

Par "mise sous vide", on comprendra donc que la chambre contient un fluide, tel que de l'air, à une pression très inférieure à la pression ambiante.

Selon le procédé connu de contrôle de l'étanchéité, la partie sensible d'un capteur de pression est agencée dans la chambre de l'appareil, puis la chambre de l'appareil est mise sous vide sur un premier poste équipé du matériel adéquat. Puis la chambre de l'appareil est close de manière étanche.

Une première mesure de référence est prise par le capteur de pression. Puis, après une durée de temporisation déterminée, une deuxième mesure de contrôle est de nouveau prise par le capteur de pression. Ces deux mesures de référence et de contrôle sont transmises à une unité électronique de traitement qui, par comparaison des deux mesures, décide de la validité de l'étanchéité de la chambre.

Un agencement connu pour mettre en oeuvre ce procédé comporte un capteur de pression qui est lié au premier poste. Le capteur de pression est relié par une liaison électrique filaire à l'unité électronique de traitement. Ainsi, la mesure est transmise à l'unité électronique de traitement sous la forme d'un signal électrique représentatif de la mesure qui est conduit jusqu'à l'unité électronique de traitement via la liaison filaire.

Cet agencement permet de mettre en oeuvre de manière satisfaisante le procédé de contrôle.

Cependant, l'appareil à contrôler est immobilisé sur le premier poste pendant toute la durée du procédé de contrôle, bloquant ainsi l'accès au premier poste pour l'appareil suivant. Or, on a constaté que la durée d'immobilisation de l'appareil sur le premier poste ralentissait toute la chaîne de montage, créant une file d'attente à l'entrée du premier poste. Ce problème est notamment la conséquence de la durée de temporisation qui ne peut pas être réduite sans que le procédé de contrôle ne perde en efficacité.

Pour résoudre notamment ce problème, l'invention propose une chaîne de montage du type décrit précédemment, **caractérisée en ce que** le capteur de pression est embarqué à bord du support mobile de manière que le transport de l'appareil soit réalisé pendant la durée de temporisation et pas une batterie.

Selon d'autres caractéristiques de l'invention :
- le capteur de pression comporte des moyens pour émettre un signal sans fil représentatif de chaque mesure de la pression à l'intérieur de la chambre à destination d'au moins un récepteur distant ;
- le récepteur est agencé à portée de signal du capteur de pression lors de la prise de la mesure de contrôle ;
- le récepteur est agencé sur le deuxième poste ;
- le capteur de pression comporte des moyens pour mémoriser au moins la mesure de référence de manière à transmettre un signal sans fil représentatif de la mesure de référence au récepteur lorsque le récepteur est à portée de signal après la prise de la mesure de référence ;
- le capteur de pression comporte des moyens pour mémoriser au moins la mesure de contrôle de manière à transmettre un signal sans fil représentatif de la mesure de contrôle lorsque le récepteur est à portée de signal après la prise de la mesure de contrôle ;
- les moyens d'émission du capteur de pression sont suffisamment puissants pour que le signal émis atteigne le récepteur lors de chacune des deux prises de mesure ;
- l'agencement de contrôle comporte un premier récepteur qui est agencé à portée de signal du capteur de pression lors de la prise de la mesure de référence et il comporte un deuxième récepteur qui est agencé à portée de signal du capteur de pression lors de la prise de la mesure de contrôle ;
- la premier récepteur est agencé sur le premier poste ;
- le deuxième récepteur est agencé sur le deuxième poste ;
- chaque récepteur est apte à transmettre chaque mesure à une unité électronique de traitement ;

L'invention a aussi pour objet un procédé de fabrication d'un servomoteur pneumatique d'assistance de freinage mettant en oeuvre un agencement de contrôle d'étanchéité selon l'invention.

D'autres caractéristiques et avantages apparaîtront au cours de la lecture de la description détaillée qui va suivre pour la compréhension de laquelle on se reportera aux dessins annexés parmi lesquels :
- la figure 1 est une vue schématique qui représente une chaîne de montage comportant un agencement de contrôle réalisé selon un premier mode de réalisation de l'invention ;
- la figure 2 est une vue similaire à celle de la figure 1 qui représente un deuxième mode de réalisation de l'invention ;
- la figure 3 est une vue similaire à celle de la figure 1 qui représente un troisième mode de réalisation de l'invention.

Dans la suite de la description, des éléments ayant des fonctions identiques, analogues ou similaires seront désignés par des mêmes numéros de référence.

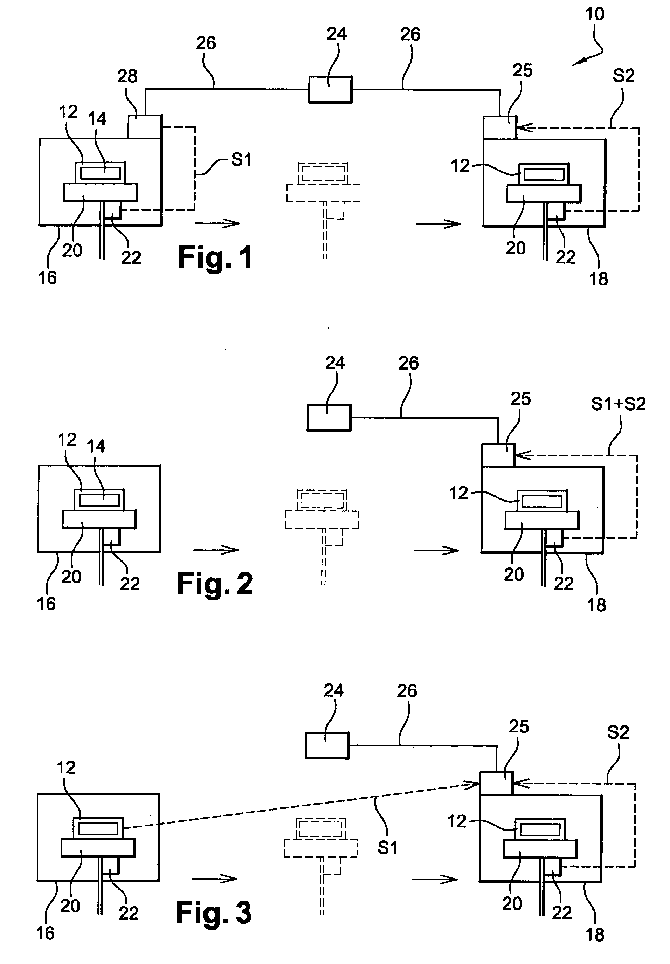

On a représenté à la figure 1 une chaîne de montage 10 en série d'appareils 12. Pour des raisons de clarté, un seul appareil 12 a été représenté à chaque figure, dans diverses positions successives sur la chaîne de montage.

L'appareil 12 comporte une chambre 14 qui est destinée à être mise sous une pression déterminée. La chambre 14 est ici destinée à être mise sous vide, c'est-à-dire que, après la mise sous vide, la pression à l'intérieur de la chambre 14 est sensiblement inférieure à la pression ambiante à l'extérieur de la chambre 14.

II s'agit par exemple de servofrein à dépression pour des véhicules automobiles ou de servomoteurs pneumatiques d'assistance de freinage pour véhicules automobiles.

La chaîne de montage 10 comporte un premier poste 16, schématisé par un rectangle situé à gauche à la figure 1, comportant des moyens (non représentés) pour faire le vide dans la chambre 14 de l'appareil 12 en cours de fabrication. Par exemple, les moyens pour faire le vide comportent une pompe qui est raccordée à la chambre 14 de l'appareil 12 par l'intermédiaire d'une conduite connectée à un orifice d'entrée (non représenté) de la chambre 14.

La chaîne de montage 10 comporte aussi un deuxième poste 18, schématisé par un rectangle situé à droite à la figure 1, qui est distant du premier poste 16 et sur lequel l'appareil 12 est destiné à subir une opération de fabrication après le contrôle de l'étanchéité de la chambre 14.

Selon une variante non représentée de l'invention, le deuxième poste est une aire de stockage pour les appareils.

La chaîne de montage 10 comporte en outre des moyens de transport de l'appareil 12 depuis le premier poste 16 jusqu'au deuxième poste 18. Les moyens de transports comportent plus particulièrement un support mobile 20, tel qu'une palette, qui porte l'appareil 12. Le sens de déplacement du support mobile 20 est indiqué par des flèches en traits pleins sur les figures.

Selon une variante non représentée de l'invention, le support mobile est un organe de préhension tel qu'une pince.

Le support mobile 20 est ici monté sur un tapis roulant (non représenté) qui déplace automatiquement le support mobile 20 depuis le premier poste 16 jusqu'au deuxième poste 18.

La chaîne de montage 10 comporte en outre un agencement de contrôle de l'étanchéité de la chambre 14 de l'appareil 12 qui comporte un capteur de pression 22.

L'agencement de contrôle comporte aussi une unité électronique de traitement 24 et des moyens (non représentés) pour transmettre les mesures prises par le capteur de pression 22 à l'unité électronique de traitement 24.

Dans les exemples représentés sur les figures, les éléments mobiles de la chaîne de montage 10, tel que l'appareil 12 et son support mobile 20 ont été représentés dans trois positions distinctes successives.

Selon un procédé connu de contrôle de l'étanchéité mettant en oeuvre un tel agencement, lors d'une première étape "E1", la chambre 14 de l'appareil 12 est mise sous vide au premier poste 16. La chambre 14 est ensuite fermée de manière étanche, et une partie sensible du capteur de pression 22 est agencée dans une position de mesure dans laquelle le capteur de pression 22 est apte à mesurer la pression à l'intérieur de la chambre 14. En général l'agencement du capteur de pression 22 est réalisé en même temps que l'opération de fermeture de la chambre 14.

Puis, lors d'une deuxième étape "E2", une première mesure de référence "M1" de la pression dans la chambre 14 est prise par le capteur de pression 22.

Puis, lors d'une troisième étape "E3" de temporisation, la chambre 14 est maintenue fermée de manière étanche pendant une durée de temporisation "T" déterminée à compter de la prise de la mesure de référence "M1". La durée de temporisation "T" est par exemple de dix secondes. Pendant la durée de temporisation "T", le capteur de pression 22 est maintenu en position de mesure sur l'appareil 12.

Ensuite, lors d'une quatrième étape "E4", une deuxième mesure de contrôle "M2" de la pression dans la chambre 14 est prise par le capteur de pression 22 à l'issue de la troisième étape "E3" de temporisation.

Afin d'éviter que l'appareil 12 contrôlé ne soit immobilisé sur le premier poste 16 lors de ce procédé, l'invention propose un agencement de contrôle dans lequel le capteur de pression 22 est embarqué à bord du support mobile 20 qui transporte l'appareil 12 du premier poste 16 au deuxième poste 18 de manière que le transport de l'appareil 12 soit réalisé pendant la troisième étape "E3" de temporisation.

Avantageusement, le capteur de pression 22 comporte des moyens (non représenté) pour émettre un signal sans fil représentatif de la mesure de pression à l'intérieur de la chambre 14 à destination d'au moins un récepteur 25, 28 distant qui est agencé à portée de signal du capteur de pression 22 lors des prises de mesure "M1, M2". Plus particulièrement le signal sans fil est ici un signal électromagnétique.

En variante, le signal sans fil est un signal sonore ou un signal optique.

Le terme "lors" indique que le signal du capteur de pression 22 est émis immédiatement après la prise de mesure "M1, M2", sans temporisation.

Le capteur de pression 22 est alimenté par une batterie électrique (non représentée) adaptée.

Ainsi, le capteur de pression 22 forme un élément autonome qu'il est aisé d'embarquer à bord du support mobile 20.

Chaque récepteur 25, 28 est apte à transmettre les mesures "M1, M2" ainsi réceptionnées jusqu'à l'unité électronique de traitement 24, par exemple par une liaison électrique filaire 26.

Plus particulièrement, dans le mode de réalisation représenté à la figure 1, l'agencement de contrôle comporte un premier récepteur 28 distant qui est agencé à portée de signal du capteur de pression 22 lors de la prise de la mesure de référence "M1".

Le premier récepteur 28 est ici agencé sur le premier poste 16.

L'agencement de contrôle comporte en outre un deuxième récepteur 25 distant qui est agencé à portée de signal du capteur de pression 22 lors de la prise de la mesure de contrôle "M2".

Le deuxième récepteur 25 est ici agencé sur le deuxième poste 18.

Ainsi, lors de la mise en oeuvre du procédé de contrôle, le support mobile 20 est mis en mouvement de manière à déplacer l'appareil 12 vers le deuxième poste 18 dès la fin de l'opération de mise sous vide de la chambre 14 au premier poste 16.

La première mesure de référence "M1" est prise soit lorsque l'appareil 12 est toujours stationné au premier poste 16, entre l'opération de mise sous vide et le début du déplacement du support mobile 20, comme illustré à la figure 1, soit au début du déplacement du support mobile 20, tant que le capteur de pression 22 est encore à portée de signal du deuxième récepteur 28 et à proximité du premier poste 16.

Le capteur de pression 22 émet alors un premier signal électromagnétique, représenté par la flèche en traits interrompus "S1" à la figure 1, représentatif de la mesure de référence "M1" à destination du premier récepteur 28.

Puis, l'appareil 12 est déplacé pendant la troisième étape "E3" de temporisation, comme représenté en traits interrompus à la figure 1, libérant ainsi le premier poste 16 pour la suite de la production.

Lorsque l'appareil 12 arrive à proximité du deuxième poste 18 ou sur le deuxième poste 18, la quatrième étape "E4" est déclenchée. La deuxième mesure de contrôle "M2" est prise par le capteur de pression 22, et transmise au deuxième récepteur 25 par un deuxième signal électromagnétique représenté par la flèche en traits interrompus "S2".

Le premier et le deuxième récepteurs 28, 25 transmettent les mesures de référence "M1" et de contrôle "M2" à l'unité électronique de traitement 24 qui en déduit si l'étanchéité de la chambre 14 est satisfaisante.

L'agencement selon l'invention permet ainsi de libérer plus rapidement le premier poste 16, et d'effectuer la troisième étape "E3" de temporisation en temps masqué, simultanément avec le transport de l'appareil 12 vers le deuxième poste 18.

Selon une variante non représentée de l'invention, les mesures de référence "M1" et/ou de contrôle "M2" sont préalablement enregistrées dans des moyens de mémorisation du capteur de pression avant d'être transmises par signal électromagnétique au récepteur associé, par exemple lorsque le récepteur associé est à portée du signal.

Selon un deuxième mode de réalisation de l'invention qui est représenté à la figure 2, le capteur de pression 22 est équipé de moyens pour mémoriser la mesure de référence "M1" et la mesure de contrôle "M2" effectuées sur ledit appareil 12 à contrôler.

En outre, l'agencement comporte un unique récepteur 25. Ainsi, la mesure de référence "M1" et la mesure de contrôle "M2" sont transmises par le signal électromagnétique, représenté par la flèche en traits interrompus "S" à la figure 2, au récepteur 25 lorsque le récepteur 25 est à portée de signal, par exemple lorsque l'appareil 12 atteint le deuxième poste 18.

Le récepteur unique 25 est agencé par exemple à portée de signal du deuxième poste 18.

Plus particulièrement, dans l'exemple représenté à la figure 2, le récepteur unique 25 est agencé sur le deuxième poste 18.

Selon un troisième mode de réalisation de l'invention qui est représenté à la figure 3, les moyens d'émission du capteur de pression 22 sont suffisamment puissants pour que la portée du signal atteigne un récepteur unique 25 lors de chacune des deux prises de mesure "M1, M2".

Ainsi, dans l'exemple représenté à la figure 3, la première mesure de référence "M1" est réalisée lorsque l'appareil 12 est stationné sur le premier poste 16. Le capteur de pression 22 émet dès la prise de la mesure de référence "M1" un signal "S1" représentatif de cette mesure au récepteur 25.

Puis, après la durée de temporisation "T" et après, ou pendant, le déplacement du support mobile 20, le capteur de pression 22 prend la deuxième mesure de contrôle "M2". Le capteur de pression 22 émet dès la prise de la mesure de contrôle "M2" un signal "S2" représentatif de cette mesure au récepteur 25.

Cette configuration est particulièrement avantageuse lorsque le premier 16 et le deuxième 18 postes sont séparés par une faible distance.

L'agencement selon l'un des quelconques modes de réalisation de l'invention permet ainsi de désengorger la chaîne de montage 10 en libérant plus rapidement la place sur le premier poste 16. Ce résultat est obtenu en effectuant simultanément la troisième étape "E3" de temporisation et le transport de l'appareil 12 à contrôler jusqu'au deuxième poste 18.

En outre, l'utilisation de moyens de transmission électromagnétique à distance permet d'adapter cet agencement facilement à différentes configurations de chaîne de montage.

### Liste des références :

- 10: Chaîne de montage ;
- 12: Appareil ;
- 14: Chambre de l'appareil ;
- 16: Premier poste ;
- 18: Deuxième poste ;
- 20: Support mobile ;
- 22: Capteur de pression ;
- 24: Unité électronique de traitement ;
- 25: Premier récepteur ;
- 26: Liaison électrique filaire ;
- 28: Deuxième récepteur ;
- "M1": Mesure de référence
- "S1": Signal électromagnétique représentatif de la mesure de référence "M1" ;
- "M2": Mesure de contrôle ;
- "S2": Signal électromagnétique représentatif de la mesure de contrôle "M2" ;
- "E1": Première étape de mise sous vide ;
- "E2": Deuxième étape de prise de la mesure de référence ;
- "E3": Troisième étape de temporisation ;
- "E4": Quatrième étape de prise de la mesure de contrôle.

## Revendications

1. Chaîne de montage (10) d'un servofrein à dépression (12) ayant une chambre (14), ladite chaîne (10) comportant un premier poste (16) de mise de la chambre (14) à une pression déterminée et un deuxième poste (18) de fabrication distant du premier poste (16), le servofrein à dépression (12) étant transporté par la chaîne de montage (10) comportant des moyens de transport, du premier poste (16) au deuxième poste (18) par un support mobile (20) de transport,
- le support mobile (20) ayant un agencement de contrôle comportant un capteur de pression (22) associé à la chambre (14) du servofrein (12) lors de sa mise à la pression déterminée pour prendre une première mesure de référence (M1) de la pression à l'intérieur de la chambre (14) après la mise à la pression déterminée de la chambre (14) au premier poste (16), et une deuxième mesure de contrôle (M2) de la pression à l'intérieur de la chambre (14) à l'issue d'une durée de temporisation,
**caractérisé en ce que**
- le capteur de pression (22) est alimenté par une batterie électrique et est embarqué à bord du support mobile (20) de manière que le transport du servofrein (12) soit réalisé pendant la durée de temporisation.

2. **Chaîne de montage (10)** selon la revendication précédente, **caractérisé en ce que** le capteur de pression (22) comporte des moyens pour émettre un signal sans fil (S2) représentatif de chaque mesure (M1,M2) de la pression à l'intérieur de la chambre à destination d'au moins un récepteur (25, 28) distant.

3. **Chaîne de montage (10)** selon la revendication précédente, **caractérisé en ce que** le récepteur (25) est agencé à portée de signal du capteur de pression (22) lors de la prise de la mesure de contrôle (M2).

4. **Chaîne de montage (10)** selon la revendication précédente, **caractérisé en ce que** le récepteur (25) est agencé sur le deuxième poste (18).

5. **Chaîne de montage (10)** selon la revendication précédente, **caractérisé en ce que** le capteur de pression (22) comporte des moyens pour mémoriser au moins la mesure de référence (M1) de manière à transmettre un signal sans fil (S1) représentatif de la mesure de référence (M1) au récepteur (25) lorsque le récepteur (25) est à portée de signal après la prise de la mesure de référence (M1).

6. **Chaîne de montage (10)** selon l'une quelconque des revendications 2 à 5, **caractérisé en ce que** le capteur de pression (22) comporte des moyens pour mémoriser au moins la mesure de contrôle (M2) de manière à transmettre un signal sans fil (S2) représentatif de la mesure de contrôle (M2) lorsque le récepteur (25) est à portée de signal après la prise de la mesure de contrôle (M2).

7. **Chaîne de montage (10)** selon l'une quelconque des revendications 3 ou 4, **caractérisé en ce que** les moyens d'émission du capteur de pression (22) sont suffisamment puissants pour que le signal (S1, S2) émis atteigne le récepteur (25) lors de chacune des deux prises de mesure (M1, M2).

8. **Chaîne de montage (10)** selon la revendication 2, **caractérisé en ce qu'**il comporte un premier récepteur (28) qui est agencé à portée de signal du capteur de pression (22) lors de la prise de la mesure de référence (M1) et il comporte un deuxième récepteur (25) qui est agencé à portée de signal du capteur de pression (22) lors de la prise de la mesure de contrôle (M2).

9. **Chaîne de montage (10)** selon la revendication précédente, **caractérisé en ce que** la premier récepteur (28) est agencé sur le premier poste (16).

10. **Chaîne de montage (10)** selon l'une quelconque des revendications 8 ou 9, **caractérisé en ce que** le deuxième récepteur (25) est agencé sur le deuxième poste (18).

11. **Chaîne de montage (10)** selon l'une quelconque des revendications 2 à 10, **caractérisé en ce que** chaque récepteur (25, 28) est apte à transmettre chaque mesure (M1, M2) à une unité électronique de traitement (24).

12. Procédé de fabrication d'un servomoteur pneumatique d'assistance de freinage (12), **caractérisé en ce qu'**il comporte une étape de contrôle d'étanchéité d'un servofrein (14) mettant en oeuvre la chaîne de montage (10) selon l'une quelconque des revendications précédentes,
procédé **caractérisé en ce que**
- dans une première étape E1, on met sous vide la chambre (14) du servofrein à dépression (12) dans un premier poste (16) et on ferme de manière étanche la chambre (14) et on installe le capteur de pression (20) pour mesurer la pression à l'intérieur de la chambre (14),
- dans une deuxième étape E2, on effectue une première mesure de référence (M1) de la pression dans la chambre (14) à l'aide du capteur de pression (22),
- dans une troisième étape de temporisation E3, on maintient la chambre (14) fermée de manière étanche pendant la durée de temporisation (T) à compter de la prise de la mesure de référence (M1), le capteur de pression (22) étant maintenu en position de mesure sur le servofrein à dépression (12),
- dans une quatrième étape E4, on effectue une seconde mesure de contrôle (M2) de la pression dans la chambre (14) avec le capteur de pression (22),
le capteur de pression (22) transmettant les signaux de mesure à un récepteur (25, 28) pour les exploiter.

## Patentansprüche

1. Montageband (10) eines Unterdruck-Bremskraftverstärkers (12), der eine Kammer (14) hat, wobei das Band (10) eine erste Station (16), um die Kammer (14) auf einen ersten bestimmten Druck zu bringen, und eine zweite Fertigungsstation (18) entfernt von der ersten Station (16) aufweist, wobei der Unterdruck-Bremskraftverstärker (12) durch das Transporteinrichtungen aufweisende Montageband (10) mittels eines beweglichen Transportträgers (20) von der ersten Station (16) zur zweiten Station (18) transportiert wird,
- wobei der bewegliche Träger (20) eine Kontrollanordnung hat, die einen Drucksensor (22) aufweist, der der Kammer (14) des Bremskraftverstärkers (12) zugeordnet wird, wenn sie auf den bestimmten Druck gebracht wird, um, nachdem die Kammer (14) an der ersten Station (16) auf den bestimmten Druck gebracht wurde, eine erste Bezugsmessung (M1) des Drucks im Inneren der Kammer (14) und nach einer Verzögerungszeit eine zweite Kontrollmessung (M2) des Drucks im Inneren der Kammer (14) durchzuführen,
**dadurch gekennzeichnet, dass**
- der Drucksensor (22) von einer elektrischen Batterie gespeist wird und in den beweglichen Träger (20) eingebaut ist, damit der Transport des Bremskraftverstärkers (12) während der Verzögerungszeit durchgeführt wird.

2. Montageband (10) nach dem vorhergehenden Anspruch, **dadurch gekennzeichnet, dass** der Drucksensor (22) Einrichtungen aufweist, um ein drahtloses Signal (S2), das für jede Messung (M1, M2) des Drucks im Inneren der Kammer repräsentativ ist, an mindestens einen fernen Empfänger (25, 28) zu senden.

3. Montageband (10) nach dem vorhergehenden Anspruch, **dadurch gekennzeichnet, dass** der Empfänger (25) bei der Kontrollmessung (M2) in Signalreichweite des Drucksensors (22) angeordnet ist.

4. Montageband (10) nach dem vorhergehenden Anspruch, **dadurch gekennzeichnet, dass** der Empfänger (25) an der zweiten Station (18) angeordnet ist.

5. Montageband (10) nach dem vorhergehenden Anspruch, **dadurch gekennzeichnet, dass** der Drucksensor (22) Einrichtungen aufweist, um mindestens den Bezugsmesswert (M1) zu speichern, um ein für den Bezugsmesswert (M1) repräsentatives drahtloses Signal (S1) an den Empfänger (25) zu senden, wenn der Empfänger (25) nach der Durchführung der Bezugsmessung (M1) in Signalreichweite ist.

6. Montageband (10) nach einem der Ansprüche 2 bis 5, **dadurch gekennzeichnet, dass** der Drucksensor (22) Einrichtungen aufweist, um mindestens den Kontrollmesswert (M2) zu speichern, um ein für den Kontrollmesswert (M2) repräsentatives drahtloses Signal (S2) zu übertragen, wenn der Empfänger (25) nach der Durchführung der Kontrollmessung (M2) in Signalreichweite ist.

7. Montageband (10) nach einem der Ansprüche 3 oder 4, **dadurch gekennzeichnet, dass** die Sendeeinrichtungen des Drucksensors (22) leistungsfähig genug sind, damit das gesendete Signal (S1, S2) den Empfänger (25) bei jeder der zwei Messungen (M1, M2) erreicht.

8. Montageband (10) nach Anspruch 2, **dadurch gekennzeichnet, dass** es einen ersten Empfänger (28), der bei der Durchführung der Bezugsmessung (M1) in Signalreichweite des Drucksensors (22) angeordnet ist, und einen zweiten Empfänger (25) aufweist, der bei der Durchführung der Kontrollmessung (M2) in Signalreichweite des Drucksensors (22) angeordnet ist.

9. Montageband (10) nach dem vorhergehenden Anspruch, **dadurch gekennzeichnet, dass** der erste Empfänger (28) an der ersten Station (16) angeordnet ist.

10. Montageband (10) nach einem der Ansprüche 8 oder 9, **dadurch gekennzeichnet, dass** der zweite Empfänger (25) an der zweiten Station (18) angeordnet ist.

11. Montageband (10) nach einem der Ansprüche 2 bis 10, **dadurch gekennzeichnet, dass** jeder Empfänger (25, 28) jeden Messwert (M1, M2) an eine elektronische Verarbeitungseinheit (24) übertragen kann.

12. Verfahren zur Herstellung eines pneumatischen Servomotors zur Bremskraftverstärkung (12), **dadurch gekennzeichnet, dass** es einen Schritt der Dichtheitskontrolle eines Bremskraftverstärkers (14) aufweist, der das Montageband (10) nach einem der vorhergehenden Ansprüche verwendet,
wobei das Verfahren **dadurch gekennzeichnet ist, dass**
- in einem ersten Schritt E1 die Kammer (14) des Unterdruck-Bremskraftverstärkers (12) in einer ersten Station (16) vakuumisiert und die Kammer (14) dicht verschlossen wird, und der Drucksensor (20) eingebaut wird, um den Druck innerhalb der Kammer (14) zu messen,
- in einem zweiten Schritt E2 mit Hilfe des Drucksensors (22) eine erste Bezugsmessung (M1) des Drucks in der Kammer (14) durchgeführt wird,
- in einem dritten Verzögerungsschritt E3 die Kammer (14) während der Verzögerungszeit (T) ab der Durchführung der Bezugsmessung (M1) dicht verschlossen gehalten wird, wobei der Drucksensor (22) am dem Unterdruck-Bremskraftverstärker (12) in der Messstellung gehalten wird,
- in einem vierten Schritt E4 mit dem Drucksensor (22) eine zweite Kontrollmessung (M2) des Drucks in der Kammer (14) durchgeführt wird,
wobei der Drucksensor (22) die Messsignale an einen Empfänger (25, 28) überträgt, um sie auszuwerten.

## Claims

1. Assembly line (10) for a vacuum brake booster (12) having a chamber (14), said line (10) including a first station (16) for putting the chamber under a specified pressure and a second manufacturing station (18) remote from the first station (16), the vacuum brake booster (12) being conveyed by the assembly line (10), which includes conveying means, from the first station (16) to the second station (18) by a moving conveying support (20),
- the moving support (20) having a monitoring arrangement including a pressure sensor (22) associated with the chamber (14) of the brake booster (12) while the latter is put under the specified pressure, in order to make a first reference measurement (M1) of the pressure inside the chamber (14) after the chamber (14) has been put under the specified pressure at the first station (16), and a second monitoring measurement (M2) of the pressure inside the chamber (14) at the end of a delay time,
**characterized in that**
- the pressure sensor (22) is powered by an electrical battery and is mounted on the moving support (20) in such a way that the brake booster (12) is conveyed during the delay time.

2. Assembly line (10) according to the preceding claim, **characterized in that** the pressure sensor (22) includes means for transmitting to at least one remote receiver (25, 28) a wireless signal (S2) representing each measurement (M1, M2) of the pressure inside the chamber.

3. Assembly line (10) according to the preceding claim, **characterized in that** the receiver (25) is arranged within range of the signal from the pressure sensor (22) when the monitoring measurement (M2) is made.

4. Assembly line (10) according to the preceding claim, **characterized in that** the receiver (25) is arranged at the second station (18).

5. Assembly line (10) according to the preceding claim, **characterized in that** the pressure sensor (22) includes means for storing at least the reference measurement (M1) in such a way that a wireless signal (S1) representing the reference measurement (M1) is transmitted to the receiver (25) when the receiver (25) is within signal range after the reference measurement (M1) has been made.

6. Assembly line (10) according to any one of Claims 2 to 5, **characterized in that** the pressure sensor (22) includes means for storing at least the monitoring measurement (M2) in such a way that a wireless signal (S2) representing the monitoring measurement (M2) is transmitted to the receiver (25) when the receiver (25) is within signal range after the monitoring measurement (M2) has been made.

7. Assembly line (10) according to either of Claims 3 and 4, **characterized in that** the transmission means of the pressure sensor (22) are sufficiently powerful for the transmitted signal (S1, S2) to reach the receiver (25) when each of the two measurements (M1, M2) is made.

8. Assembly line (10) according to Claim 2, **characterized in that** it includes a first receiver (28) which is arranged within range of the signal from the pressure sensor (22) when the reference measurement (M1) is made, and **in that** it includes a second receiver (25) which is arranged within range of the signal from the pressure sensor (22) when the monitoring measurement (M2) is made.

9. Assembly line (10) according to the preceding claim, **characterized in that** the first receiver (28) is arranged on the first station (16).

10. Assembly line (10) according to either of Claims 8 and 9, **characterized in that** the second receiver (25) is arranged on the second station (18).

11. Assembly line (10) according to any one of Claims 2 to 10, **characterized in that** each receiver (25, 28) is adapted to transmit each measurement (M1, M2) to an electronic processing unit (24).

12. Method for manufacturing a pneumatic brake booster servomotor (12), **characterized in that** it includes a step of monitoring the air-tightness of a brake booster (14) by using the assembly line (10) according to any one of the preceding claims,
the method being **characterized in that**
- in a first step E1, the chamber (14) of the vacuum brake booster (12) is evacuated at a first station (16), the chamber (14) is closed in an airtight way, and the pressure sensor (20) is installed to measure the pressure inside the chamber (14),
- in a second step E2, a first reference measurement (M1) of the pressure in the chamber (14) is made with the aid of the pressure sensor (22),
- in a third, delay step E3, the chamber (14) is kept closed in an airtight way during the delay time (T) which is reckoned from the making of the reference measurement (M1), the pressure sensor (22) being kept in the measuring position on the vacuum brake booster (12),
- in a fourth step E4, a second monitoring measurement (M2) of the pressure in the chamber (14) is made with the pressure sensor (22),
the pressure sensor (22) transmitting the measurement signals to a receiver (25, 28) for subsequent use.
